# EUROPEAN PATENT APPLICATION

(11) **EP 1 453 293 A1**
(43) Date of publication of application: **01.09.2004**
(21) Application number: 04075474.9
(22) Date of filing: 16.02.2004
(51) Int. Cl.: H04N 1/00

(54) **System and method for viewing and selecting images for printing**

(30) Priority: 27.02.2003 US 375669
(71) Applicant: EASTMAN KODAK COMPANY, Rochester, New York 14650 (US)
(72) Inventor: Romano, Nathan J., c/o Eastman Kodak Company, Rochester, New York 14650-2201 (US); Oliver, Jason R., c/o Eastman Kodak Company, Rochester, New YOrk 14650-2201 (US); Eckhaus, Neal, c/o Eastman Kodak Company, Rochester, New York 14650-2201 (US); Parulski, Kenneth A., c/o Eastman Kodak Company, Rochester, New York 14650-2201 (US)
(74) Representative: Weber, Etienne Nicolas

(57) **Abstract**

The present invention provides for a photography system that includes a digital camera (300) and a digital printer (800). The digital photography system comprises a digital camera for capturing images and a digital printer for producing hardcopy prints. The camera includes an image sensor (314) for capturing images; a memory (318) for storing a plurality of the captured images; an image display (332) for displaying the stored images. The printer includes a marking apparatus (412) adapted to provide the images on a print; an electrical interface for transferring images from the camera to the printer; and user controls (430) for controlling the digital photography system to provide a slide show operating mode to display each of the plurality of captured images for a set time interval as a current image on an image display, and responsive to a user engaging a print order user control during the set time interval, providing a print order indicating that the currently displayed image is to be printed.

## Description

### FIELD OF THE INVENTION

The present invention relates to a color digital photography system including a digital camera and a digital printer and, more particularly, a user interface for viewing and selecting images captured by the digital camera for printing on the digital printer.

### BACKGROUND OF THE INVENTION

Digital cameras and digital printers are available from the Eastman Kodak Company and many other suppliers. Current digital cameras, such as the Kodak DX4300 camera, capture images with a single-chip color CCD image sensor, process the images to provide "finished" RGB images, compress the images using JPEG compression, and store the images using internal Flash EPROM memory and/or using a removable memory card. The images can be reviewed on an LCD image display on the back of the camera, and unwanted images can be deleted. An image can be selected for printing by advancing the review display to a first image of interest, pressing a "print" button as the image is displayed, and then indicating the number of prints desired. The camera then produces a DPOF print order file indicating the name of the first image and the number of copies selected by the user. The user then manually advances the image display to locate a second image of interest. The user again presses the "print" button, and then indicates the number of copies desired of this second image. The camera then updates the DPOF print order file by appending the new "job", including the second image name and the number of copies, to the original DPOF file. The user continues in this manner until all images to be printed are selected.

The memory card can then be removed from the digital camera and placed in a digital color printer, such as the Kodak Personal Picture Maker PM200. This printer includes memory card slots for the well-known Compact Flash and Smart Media Flash EPROM memory cards. The DPOF file can be read by the printer, and the desired prints can be produced, for example by using a color ink jet head which marks photo ink jet paper.

These prior art systems unfortunately require the user to perform a sequence of many operations in order to locate pictures of interest and specify the number of prints to be made. This makes it difficult for the user to create a large print order that includes many different images. What is needed is an easier method of creating a print order, to enable images captured by a digital camera to be quickly and easily selected for printing on a digital printer.

### SUMMARY OF THE INVENTION

The present invention provides for a photography system that includes a digital camera and a digital printer. The digital photography system comprises a digital camera for capturing images and a printer for producing hardcopy prints; the camera including an image sensor for capturing images; a memory for storing a plurality of the captured images; an image display for displaying the stored images; and the printer including a marking apparatus adapted to provide the images on a print; an electrical interface for transferring images from the camera to the printer; and user controls for controlling the digital photography system to provide a slide show operating mode to display each of the plurality of captured images for a set time interval as a current image on an image display, and responsive to a user engaging a print order user control during the set time interval, providing a print order indicating that the currently displayed image is to be printed.

The present invention further provides for a method of producing prints, the method comprising the steps of capturing and storing a plurality of images using an electronic camera; providing a print order user control; displaying a first image from the plurality of stored images for a first time interval on an image display; responsive to a user engaging the print order user control during the first time interval, providing a print order indicating that the first image is to be printed; at the end of the first time interval, automatically displaying a second image from the plurality of stored images for a second time interval; and responsive to a user engaging the print order user control during the second time interval, providing a print order indicating that the second image is to be printed.

The present invention further provides for a method of producing prints which comprises the steps of providing a set of digital images; providing a print order user control; displaying a first image from the set of digital images for a first time interval on an image display; responsive to a user engaging the print order user control during the first time interval, providing a print order indicating that the first image is to be printed and increasing the first time interval, to a larger time interval; and at an end of the larger time interval, automatically displaying a second image from the plurality of stored images.

The present invention further provides for a method of producing prints which comprises the steps of: providing a set of digital images; providing a print order user control; displaying, on an image display, the set of digital images as a sequence of images which are automatically updated; and responsive to a user engaging the print order user control during the display of a subset of the set of digital images, providing a print order indicating that the subset of digital images is to be printed.

The present invention further provides for a method of producing a print order using a digital camera which comprises the steps of: capturing and storing a set of digital images using the digital camera; displaying, on an image display of the digital camera, the set of digital images as a sequence of images which are automatically updated; and responsive to a user engaging a print order user control during the display of a subset of the set of digital images, providing a print order indicating that the subset of digital images is to be printed.

### BRIEF DESCRIPTION OF THE DRAWINGS

FIG 1 depicts a block diagram of a digital camera that captures and stores images on a digital storage media;
FIG. 2 depicts a block diagram of a digital printer having user controls for selecting images to be printed;
FIG. 3 depicts a perspective view of the digital camera and the digital printer;
FIG. 4 depicts a top view of the digital printer;
FIG. 5 and 6, taken together, depict a flow diagram of a first method for viewing and selecting images for printing from the digital printer;
FIG 7 depicts a file structure for images captured by the digital camera;
FIG. 8A and 8B depict graphical user interface screens used as pictures are selected in the "slide show" mode;
FIGS. 9A to 9D depict graphical user interface screens used in different printing modes;
FIG. 10 depicts a flow diagram of a second method for viewing and selecting images for printing from the digital printer;
FIG. 11 depicts a flow diagram of a third method for viewing and selecting images for printing from the digital printer; and
FIG. 12 depicts a flow diagram of a method for viewing and selecting images for printing from the digital camera.

### DETAILED DESCRIPTION OF THE INVENTION

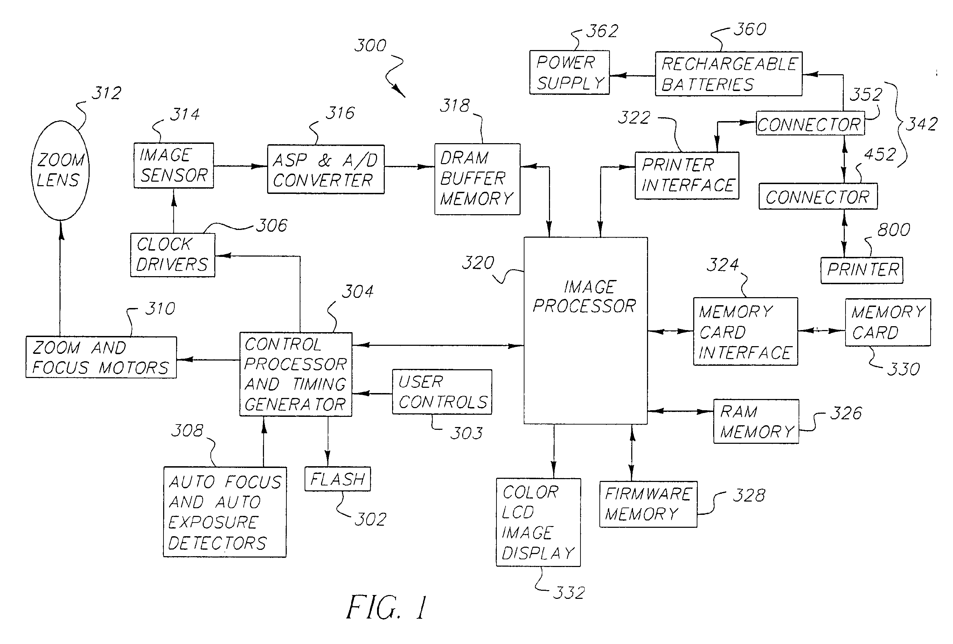

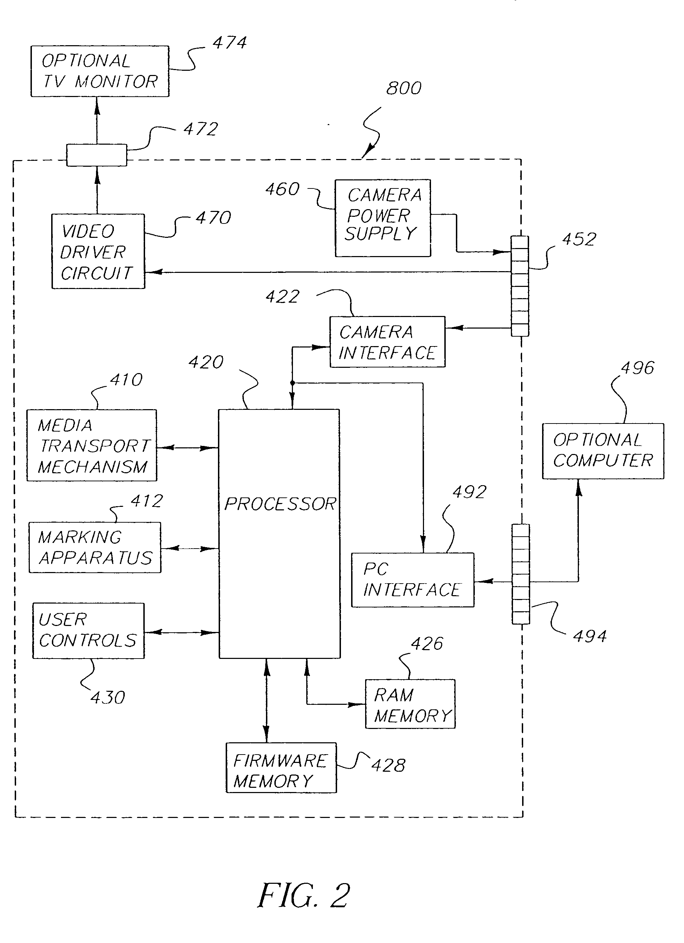

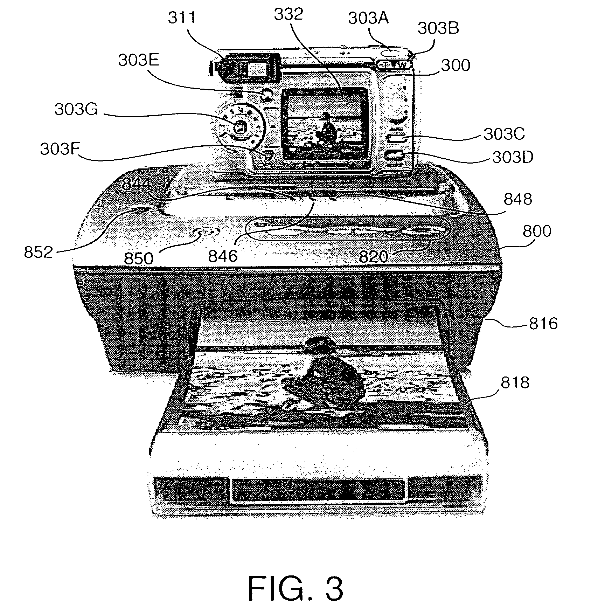

Referring now to the drawings, wherein like reference numerals represent identical or corresponding parts throughout the several views, a digital camera 300 is depicted in FIG. 1 and FIG. 3. Digital camera 300 stores images on a digital storage medium, such as a memory card 330 as shown in FIG. 1, which can be displayed on a color LCD image display 332. A digital printer 800, shown in detail in FIG. 2 and FIG. 3, produces color hardcopy prints using a color marking apparatus 412, such as thermal printing head, and a media transport mechanism 410. Digital printer 800 includes a camera interface 422, such as a USB interface, for transferring images from digital camera 300 and controlling the images displayed on the camera's color LCD image display 332. As illustrated in FIG. 2, digital printer 800 incorporates user controls 430 for selecting specific images to be printed from the plurality of digital images stored on memory card 330 within digital camera 300. The user controls 430 on digital printer 800 are specifically arranged to provide easy control of printer 800, since they do not need to be miniaturized in order to fit on a small portable digital camera, such as camera 300.

Referring now to FIG. 1 in detail, FIG. 1 is a block diagram showing digital camera 300 that captures and stores digital images on a digital storage medium, such as memory card 330. Digital camera 300 includes a zoom lens 312 having zoom and focus motor drives 310 and an adjustable aperture and shutter (not shown). The digital camera 300 includes user controls 303 which are shown in FIG 3 as user controls 303A - 303 G. The user composes the image using optical viewfinder 311 and zoom lens control switch 303B shown in Fig. 3. Zoom lens 312 focuses light from a scene (not shown) on an image sensor 314, for example, a single-chip color CCD image sensor, using the well-known Bayer color filter pattern. Image sensor 314 is controlled by clock drivers 306. Zoom and focus motors 310 and clock drivers 306 are controlled by control signals supplied by a control processor and timing generator circuit 304. When the user depresses shutter button 303A (FIG. 3) to take a picture, control processor and timing generator 304 receives inputs from autofocus and autoexposure detectors 308 and controls a flash 302. The analog output signal from image sensor 314 is amplified and converted to digital data by analog signal processing (ASP) and analog-to-digital (A/D) converter circuit 316. The digital data is stored in a DRAM buffer memory 318 and subsequently processed by an image processor 320 controlled by the firmware stored in a firmware memory 328, which can be flash EPROM memory. The camera image processor can be a general purpose digital signal processor, or a custom processor designed specifically for use in a digital camera. In alternative embodiments, the functions of the image processor 320, firmware memory 328, RAM memory 326, firmware memory 328, DRAM buffer memory 318, and/or control processor and timing generator 304 can be combined on one or more integrated circuits.

Power for the digital camera 300 is provided by rechargeable batteries 360, via power supply circuits 362. In some embodiments, the rechargeable batteries 360 can be recharged from power provided by connector 352.

The processed digital image file is provided to a camera memory card interface 324, which stores the digital image file on memory card 330. Removable memory cards 330 which are described as an example in the present specification are known to those skilled in the art, and are one type of digital storage media. The memory card 330 can conform to the Compact Flash interface standard, such as described in the *CompactFlash Specification Version 1.3,* published by the CompactFlash Association, Palo Alto, California, August 5, 1998. The removable memory card can alternately conform to the PCMCIA, Smart Media, Memory Stick, or SD memory card formats. The present invention is not limited to memory cards and it is noted that other types of digital storage media, such as magnetic hard drives, magnetic tape, or optical disks, can alternatively be used to store the digital images.

Processor 320 performs color interpolation followed by color and tone correction, in order to produce rendered sRGB image data as defined in IEC 61966-2-1 *Multimedia systems and equipment - Colour measurement and management - Part 2-1: Colour management - Default RGB colour space* - *sRGB* available from the International Electrotechnical Commission, Geneva, Switzerland. The rendered sRGB image data is then JPEG compressed and stored as a JPEG image file on memory card 330 using an JPEG/Exif version 2.1 image file as defined in *Digital Still Camera Image File Format Standard (Exchangeable Image File Format for Digital Still Camera: Exif),* version 2.1, JEIDA-49-1998 available from the Japan Electronic Industry Development Association, Tokyo, Japan. The JPEG/Exif image files can be utilized by many different image capable devices, such as computers and stand-alone printers.

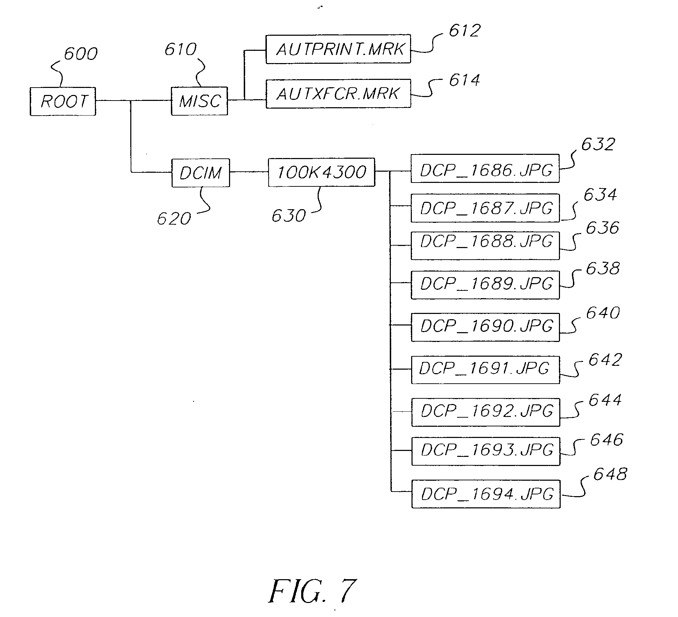

The Exif image files are stored on the removable memory card 330 using a directory structure conforming to the so-called "DCF" rules defined in "Design Rule For Camera File System" version 1.0, December 1998 by the Japan Electronics Industries Development Association (JEIDA), Tokyo, Japan. An example directory structure recorded on removable memory card 330 by the camera 300 is depicted in FIG. 7. As shown in Fig. 7, two directories are recorded under a root directory 600. The first is a MISC directory 610 containing a control file 612 named AUTPRINT.MRK and a control file 614 named AUTXFER.MRK. Control files 612 and 614 are DPOF image utilization files which specify images to be printed and emailed, as will be described later.

The second directory recorded under root directory 600 is a DCIM directory 620, which contains subdirectory 630. Subdirectory 630 is named 100K4300, to conform to the DCF rules, and contains nine JPEG compressed Exif image files, file 632 named DCP_1686.JPG, file 634 named DCP_1687.JPG, file 636 named DCP_1688.JPG, file 638 named DCP_1689.JPG, file 640 named DCP_1690.JPG, file 642 named DCP_1691.JPG, file 644 named DCP_1692.JPG, file 646 named DCP_1693.JPG, and file 648 named DCP_1694.JPG. Files 632 through 648 noted above are Exif image files captured by the digital camera 300.

Processor 320 also creates a "thumbnail" size image, as described in commonly assigned US patent 5,164,831 "Electronic still camera providing multi-format storage of full and reduced resolution images" to Kuchta et al. These thumbnail images are included along with the main (e.g. high resolution) image as part of the Exif image. The thumbnail image from the Exif image file can be retrieved from the memory card 330, stored in RAM memory 326, and supplied to color LCD image display 332, which displays the captured image for the user to review. User controls 303 and the text, icons, and images displayed on the display 332 provide the camera graphical user interface (camera GUI). As shown in FIG 3, the user controls 303 include a number of miniaturized buttons 303C-303F and a 4-way controller 303G. These controls must be small in order to fit on the back of camera 300, and arranged so that they do not get in the way during the picture taking operations. After a series of images have been taken by depressing shutter button 303A, review switch 303F may be pressed so that the captured images can be reviewed on color LCD image display 332.

When the camera is operated independently of the printer, the camera graphical user interface is controlled by the user interface portion of the firmware stored in firmware memory 328, which controls how the processor 320 responds to user controls 303 and creates the information displayed on display 332. Display 332 can be an active matrix color LCD display. Alternately, it can use other display technologies, such as organic light emitting diodes (OLEDs). In some embodiments, digital camera 300 also provides a video output signal (such as an NTSC or PAL video signal) produced by image processor 320 from the digital images stored on memory card 330, and supplied to the digital printer 800 via printer interface 322 and connector 352, for displaying the captured images on an optional TV monitor 474 (FIG 2).

Digital camera 300 may include firmware stored in firmware memory 328 to control image processor 320 to enable the user to create a print order. The print order can be stored as a file, known as an image utilization file or print order file. The file indicates which images are to be printed. Such utilization files are described in commonly-assigned EP Patent Application No. 98200348.5 filed February 5, 1998, to Parulski, et. al. The file, containing the print order information, is created as a user selects images to be printed using user controls 303 while viewing the captured images on display 332, and is then stored on memory card 330 along with the image files. The print order file can be a text file (such as a Digital Print Order Format (DPOF) file) that identifies the names of the captured images have been selected for printing, and how many copies of each individual image are to be printed.

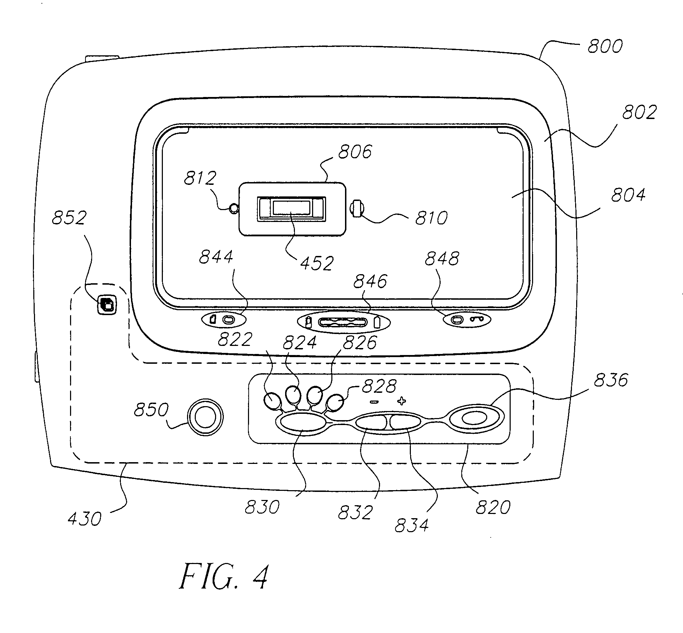

After a series of images have been taken and stored on memory card 330, the camera 300 is inserted into the recess 804 in digital printer 800 shown in FIG 4. The printer 800 includes a connector 452 which mates with a connector 352 in digital camera 300 (FIG. 1) in order to electrically interconnect printer interface 322 in digital camera 300 to camera interface 422 in digital printer 800. In one preferred embodiment, the electrical interface 342 between digital camera 300 and digital printer 800 uses the universal serial bus version 2.0 (USB 2) interface specification, although many other interface specifications may be used, including the well-known IEEE 1394 interface specification, or other cable interface or card interface specifications, including proprietary interface specifications.

FIG. 2 depicts a block diagram of digital printer 800. FIG. 3 depicts the appearance of digital printer 800. Digital printer 800 produces digital prints 818 (Fig. 3) from images provided on memory card 330 via interface 342 from digital camera 300. The interface 342 includes connector 452 on digital printer 800, which connects with camera interface circuit 422, which is connected to processor 420 and to PC interface 492. The PC interface 492 can be connected to an optional computer 496 through a connector 494, which can be a USB connector. A video output signal from the digital camera 300, supplied via connector 452, can be provided to an optional TV monitor 474, which connects using connector 472 to video driver circuit 470. Digital printer 800 includes a media transport mechanism 410, such as a motor-driven roller, for moving hard copy media (e.g. paper) past a marking apparatus 412 (e.g., a color thermal printing head) under the control of a printer processor 420. Processor 420 controls the marking apparatus 412 to provide controlled amounts of various color inks or dyes in order to produce a pictorial image on the hardcopy media. Color marking apparatus 412 may alternately use color ink jet, color electrophotographic, or color instant technologies to produce the digital prints. As shown in FIG 3, digital printer 800 includes a paper exit slot 816 where the print can be ejected from digital printer 800.

Digital printer 800 is controlled by firmware stored in printer firmware memory 428, which controls how processor 420 responds to user controls 430. Since the image files created by digital camera 300 use the JPEG/Exif image format, they are JPEG compressed and must be decompressed prior to printing. In a preferred embodiment, this decompression is provided by image processor 320 in camera 300, in order to reduce the required performance and cost of processor 420 in digital printer 800. In this preferred embodiment, image processor 320 also provides interpolation, sharpening, and color correction to prepare the image data properly to be used by the marking apparatus 412. This processed image data is then transferred from the digital camera 300 to the digital printer 800 via interface 452.

The user can control digital printer 800 using printer user controls 430. User controls 430 and the text, icons, and images displayed on the color LCD image display 332 of digital camera 300 or on the optional TV monitor 474 (FIG 2) provide the printer graphical user interface (printer GUI). The printer GUI is controlled by the user interface portion of the firmware stored in printer firmware memory 428, which controls how processor 420 responds to user controls 430 and the color LCD image display control portion of the firmware stored in camera firmware memory 328, which controls how image processor 320 creates the information displayed on color LCD image display 332.

To quickly allow the images stored on memory card 330 to be displayed on color LCD image display 332, image processor 320 downloads the "thumbnail" size images from the images provided on memory card 330. These thumbnail images are stored in RAM memory 326 and supplied to display 332, so that the user can select the images to be printed using user controls 430 on printer 800. The user controls 430 on the digital printer 800 are much larger that those on digital camera 300, since the digital printer 800 does not need to be a hand-held device. Furthermore, the user controls 430 can be arranged and labeled in order to be very easy to use. Instead of view the "thumbnail" size images on LCD image display 332, video size images can be viewed on the optional TV monitor 474.

FIG. 4 depicts a top view of the digital printer 800. The printer 800 includes a raised top region 802 having recess 804 for receiving the digital camera 300. The recess 804 includes a connecting interface region 806 which includes electrical connector 452 which mates with connector 352 in digital camera 300 (FIG 1) in order to electrically interconnect printer interface 322 in digital camera 300 to camera interface 422 in digital printer 800. The recess 804 further includes pins for mechanically securing the digital camera 300, including a raised post 810 which slides inside the tripod mount hole (not shown) on the bottom of the digital camera 300, and a locating pin 812 which slides inside a locating hole (not shown) on the bottom of the digital camera 300.

The digital printer 800 includes user controls 430. The user controls 430 include a transfer button 850 and a slide show button 852. The transfer button 850 is used to initiate transfer of digital images from the memory card 330 of the digital camera 300 to the optional computer 496 (see FIG 2). The slide show button 852 is used to initiate a slide show display of all of the images stored on the memory card 330, either on the LCD 332 of the digital camera 332, or on an optional television monitor 474 (see FIG 2), such as an NTSC or PAL video monitor. During the slide show display, the user can press a print button 836 to create or update a print order, to order a print of the currently displayed image.

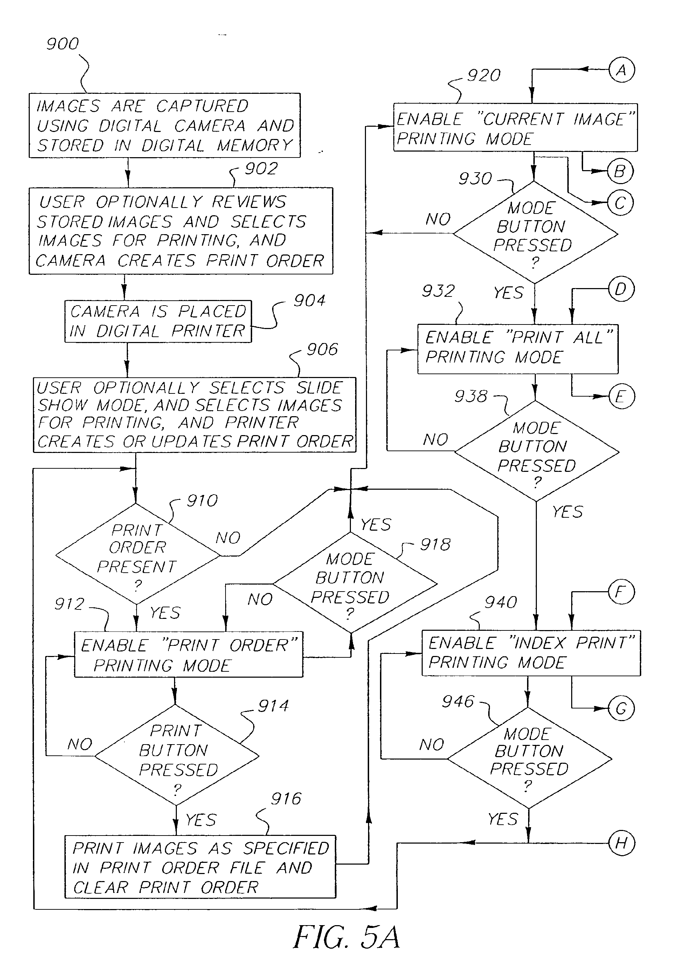

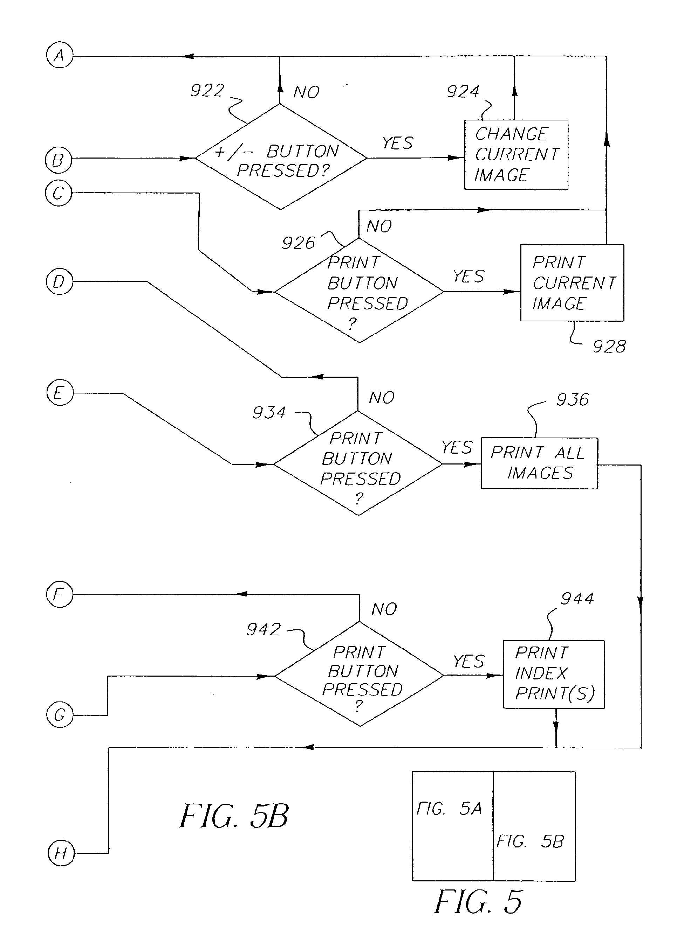

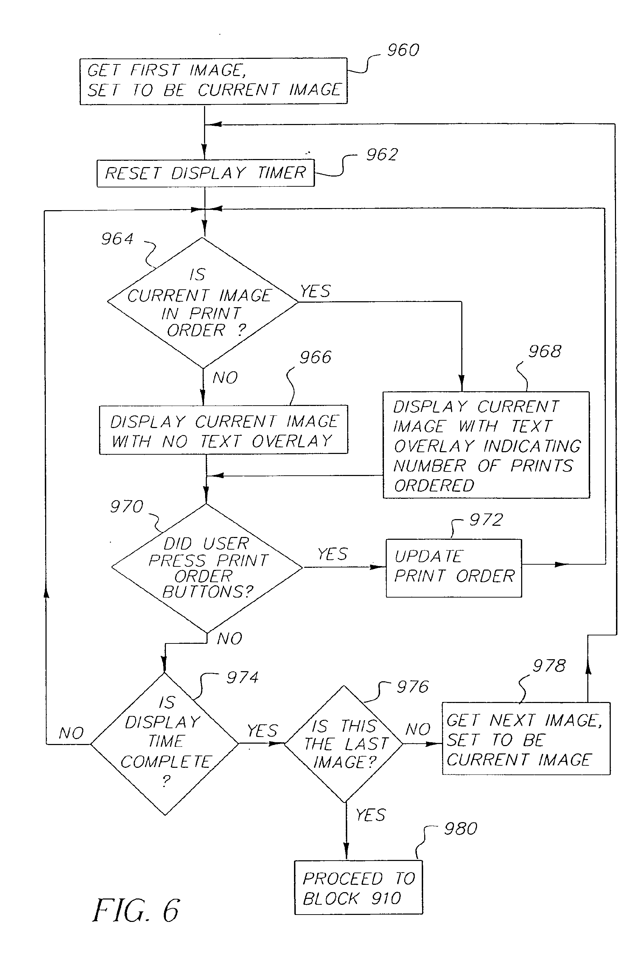

The user controls 430 also include a printing mode selection user interface 820, which includes a plurality of status icons 822-828, which comprise a printing mode display. Icon 822 indicates the "print order" printing mode, icon 824 indicates the "print current image" printing mode, icon 826 indicates the "print all" printing mode, and icon 828 indicates the "index print" printing mode. As will be described later with reference to FIG. 5, when the digital camera 300 is docked to the digital printer 800, the memory card 330 of the digital camera 330 is checked to determine if there is a print order, such as a DPOF file. The print order can be created using the digital camera as was described earlier, or using the "slide show" feature of the digital printer 800, as will be described with reference to FIG. 6. If there is a print order, the printing mode is automatically set to the "print order" mode and status icon 822 is displayed.

If there is no print order, the printing mode is automatically set to the "print current image" mode, and status icon 824 is displayed. A "printing mode" button 830 is used to change modes. Each time the user presses the button 830, the printing mode cycles to the next mode. In other words, if the current mode is the "print order" mode, the mode changes to the "print current image" mode when button 830 is pressed a first time, then to the "print all" mode when button 830 is pressed a second time, then to the "index print" mode when button 830 is pressed a third time, and finally back to "print order" mode when button 830 is pressed a fourth time.

The user controls 430 also include "+/-" buttons 832 and 834. These buttons allow the current image, displayed on color image display 332 of digital camera 300, to be changed. For example, the user can push button 830 until the printing mode is set to "print current image" mode, and then press the "+" button 832 one or more times to display the next images in place of the current image, or press the "-" button one or more times to display a previous image as the current image. Then, the user presses the print button 836 to make a print of the current image.

The digital printer 800 includes a paper error LED 844 which blinks when the digital printer 800 has a paper error, such as a paper jam or an empty paper supply. The digital printer 800 also includes a donor error LED 848 which blinks when the digital printer 800 has a donor error, such as a donor ribbon jam or when the donor ribbon has been fully used. The digital printer 800 includes camera battery power LED indicators 846 which indicate the battery level of the rechargeable batteries 360 (see FIG. 1) of the digital camera 300.

FIG. 5 and FIG 6 together depict a flow diagram of a typical user interaction scenario. In block 900, a camera user captures many digital images using the digital camera 300. The digital images are stored as Exif image files using the memory card 330. In block 902, the user decides whether to create a print order using the digital camera 300. If yes, the user reviews the captured images which are stored on the memory card 330 and selects the images to be printed and the number of copies of each print to make. For example, the user may request no copies of some images, a single copy of other images, and two or more copies of certain favorite images. The selection is done using the user controls 303, as the user views the images on the color image display 332 of the digital camera 300. In response, the image processor 320 in the digital camera 300 creates a print order file, which can be a DPOF file, and stores the file on the memory card 330.

In block 904, the user places the digital camera 300 in the digital printer 800, in order to make prints of some of the captured images. In block 906, the user optionally selects the slide show mode, by pressing button 852 (shown in FIG. 3) on the digital printer 800. This enables the user to easily select images for printing, as they are automatically updated on the image display at a regular interval (e.g. every 5 seconds), without having to manually advance through the set of images. As the user selects images for printing, the printer creates a print order, or updates the existing print order.

The steps provided in block 906 of FIG. 5 after the user presses the slide show button 852 are shown in greater detail in FIG. 6. In block 960, the first image stored on memory card 330 (e.g. image 632 named DCP_1686.JPG in FIG. 7) is set to be the current image. In block 962, the slide show timer is reset, and begins counting the time until the next image should be displayed. In one embodiment, the image processor 320 in digital camera 300 provides the slide show timer, and the time per image is set to a default value, such as 5 seconds. In alternative embodiments, the slide show timer can be provided by the processor 420 in digital printer 800, and the time each image is displayed can be set by the user, for example by using user controls 430.

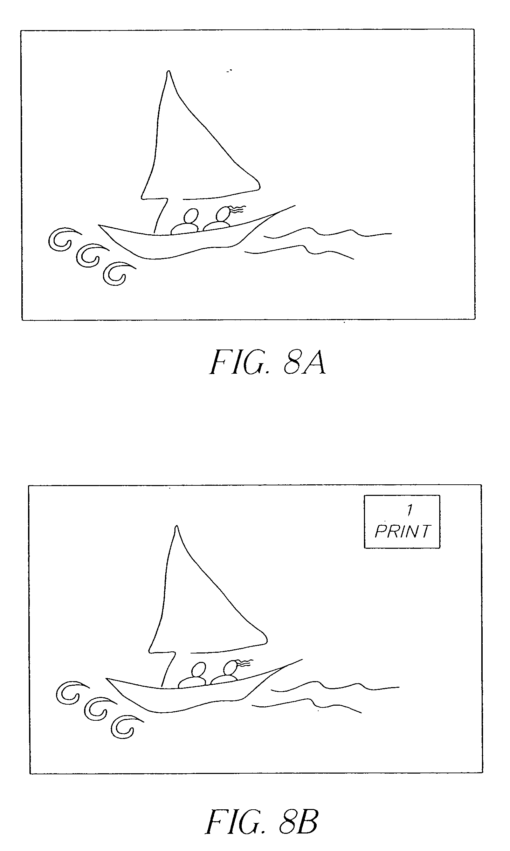

In block 964, the image processor 320 in digital camera 300 checks whether the current image (e.g. image 632 in FIG. 7) is presently part of a print order. For example, the image processor checks to see if there is a DPOF print order file 612 named AUTPRINT.MRK (see FIG. 7) on the removable memory card 330, and if so whether there is a print job which includes this image. If "no" to block 964, the current image is displayed on the color image LCD display 332 (see FIG. 1) or the optional TV monitor 474 (see FIG 2) with no text overlay, as shown in FIG. 8A. This would be the case if the user did not create a print order in block 902 of FIG. 5. If "yes" to block 964, ( the current image is included in the print order), the current image is displayed with a text overlay indicating the number of prints ordered, for the current image. FIG 8B shows the same image, with a text overlay indicating that "1 print" has been ordered. In alternative embodiments, the number of prints ordered can be shown using an icon, or can be shown using a separate display on the digital printer 800.

In block 970, the processor 420 determines whether the user pressed one of the print order buttons (e.g. one of the user controls 430 on the digital printer 800). In one embodiment, the print order button is the print button 836 (see FIG. 4). In this embodiment, each time the print order button is pressed, one additional print of the current image (e.g. image 632 in FIG. 7) is added to the print order. In alternative embodiments, several buttons (e.g. "-" button 832 and "+" button 834) can be used to enable the user to increase or decrease (in the case of a mistake) the number of prints to be made of the current image.

If the user pressed a print order button in block 970 ("yes" to block 970), the print order is updated in block 972. In block 972, if there is currently no print order, a print order is created indicating that the current image (e.g. image 632 in FIG. 7) is to be printed, and the number of copies to be made. This print order can be stored, for example, as temporary data in the RAM memory 426 of the digital printer 800, or alternatively can be stored as a print order file (e.g. as file 612 named AUTPRINT.MRK shown in FIG. 7) on the removable memory card 330 in the digital camera 300. If there is currently a print order (for example, a print order indicating that other images are to be printed), the print order is updated to indicate that the current image (e.g. image 632 in FIG. 7) is to be printed, and the number of copies to be made. After creating or updating the print order in block 972, block 964 is repeated, so that the current image is now displayed with the text overlay indicating the number of prints ordered (block 968).

If the user did not press a print order button in block 970 ("no" to block 970), in block 974 the image processor 320 in the digital camera 300 checks whether the display time is complete. If not ("no" to block 974), blocks 964 through 974 are repeated. If the display timer has reached the time limit (e.g. 5 seconds) in block 974 ("yes" to block 974), in block 976 the image processor 320 in digital camera 300 checks whether the current image (e.g. image 632 in FIG. 7) is the last image (e.g. image 648 named DCP_1694.JPG in FIG. 7) stored on the memory card 330. If the current image is not the last image ("no" to block 976), in block 978 the image processor 320 in the digital camera 300 gets the next image (e.g. image 634 named DCP_1687.JPG in FIG. 7) and in block 962 resets the display timer for the new current image.

Blocks 962 through 964 are then repeated for all of the images stored on the memory card 330. Each time the user presses a print order button (block 970) the print order is updated to indicate that the current image should be printed. Thus, the user does not need to press any buttons to advance through the images to compose the print order. Rather, the images are automatically advanced, and the user only needs to press buttons when selecting particular images to be printed. After all of the images (e.g. images 632 through 648 in FIG. 7) have been displayed, the print order is complete.

If the current image is the last image ("yes" to block 976), in block 980 the slide show mode (block 906 in FIG. 5) is now completed, and block 910 in FIG. 5 is performed. If the user pressed the print order button during the slide show, in block 910 a print order is present, and the "print order" printing mode is enabled in block 912.

In one embodiment, the print order is stored as the AUTPRINT.MRK print order file 612 (FIG 7), an example of which is shown in Table I below:

**Table I**

| | |
|---|---|
| 1 | [HDR] |
| 2 | GEN REV = 01.10 |
| 3 | GEN CRT = "KODAK DX4300 ZOOM DIGITAL CAMERA" |
| 4 | GEN DTM = 2003:02:12:12:28:10 |
| 5 | [JOB] |
| 6 | PRT PID = 001 |
| 7 | PRT TYP = STD |
| 8 | PRT QTY = 001 |
| 9 | IMG FMT = EXIF2 -J |
| 10 | <IMG SRC = "../DCIM/100K4300/DCP_1686.JPG"> |
| 11 | [JOB] |
| 12 | PRT PID = 002 |
| 13 | PRT TYP = STD |
| 14 | PRT QTY = 002 |
| 15 | IMG FMT = EXIF2 -J |
| 16 | <IMG SRC = "../DCIM/100K4300/DCP_1688.JPG"> |
| 17 | [JOB] |
| 18 | PRT PID = 003 |
| 19 | PRT TYP = STD |
| 20 | PRT QTY = 001 |
| 21 | IMG FMT = EXIF2 -J |
| 22 | <IMG SRC = "../DCIM/100K4300/DCP_1692.JPG"> |

The file includes a header section (lines 1-4) having a header identifier ("HDR" in line 1), a DPOF version number (01.10 in line 2), the make and model of the digital camera that created the DPOF file (Kodak DX4300 zoom digital camera in line 3), and the date and time that the DPOF file was created (line 4). The file also includes three "JOB" sections, each of which indicate an intention to produce a specific number of prints of a specific image file.

For example, lines 5 through 10 correspond to a first job, having product ID 001 (line 6). This first job is to provide a quantity of one (QNT = 001 in line 8) standard type prints (TYP = STD in line 7) using the Exif image file (line 9) which is named DCP_1686.JPG, within subdirectory 100K4800 within directory DCIM (line 10). In other words, the user pressed the print button 836 (FIG. 4) one time while the first image was displayed as part of the "slide show", to produce a print order indicating that one copy of the image file 632 in FIG. 7 should be made.

Similarly, lines 11 through 16 correspond to a second job, having product ID 002 (line 12). This second job is to provide a quantity of two (QNT = 002 in line 14) standard type prints (TYP = STD in line 13) using the Exif file (line 15), which is named DCP_1688.JPG, within subdirectory 100K4800 within directory DCIM (line 16). In other words, the user pressed the print button 836 (FIG. 4) twice while the third image was displayed as part of the "slide show", to produce a print order indicating that two copies of the image file 636 in FIG. 3 should be made.

Job 3 (lines 18-22) indicates an intention to print one standard size copy of image file 644 in FIG. 7, which is an Exif file named DCP_1692.JPG within folder 430 which is named 100K4800, as indicated by line 22. In other words, the user pressed the print button 836 (FIG. 4) while this image was displayed as part of the "slide show"

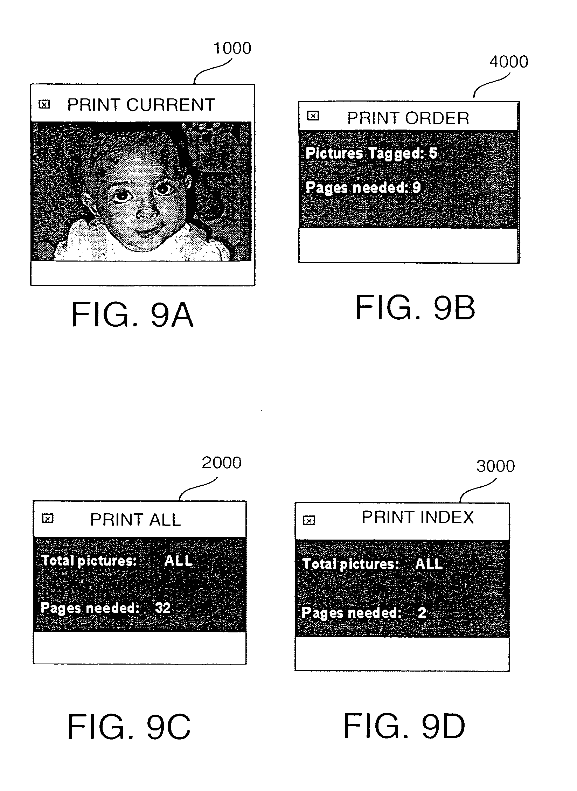

In block 910 of FIG 5, the system determines if there is a print order. In one embodiment, the processor 420 in the digital printer 800 sends a request to the image processor 320 in the digital camera 300 to determine whether there is a print order file (e.g. the print order file depicted in Table 1) present on the memory card 330. In an alternative embodiment, the print order is stored as a list of images to be printed in the RAM memory 426 of digital printer 800. If there is a print order ("yes" in block 910), in block 912 the "print order" printing mode is automatically enabled (e.g. it becomes the default mode) and the "print order" printing mode icon 822 is displayed. If no (e.g. if the user did not select any images to be printed in the "slide show" mode in block 906, in block 920 the "current image" printing mode is automatically enabled and the "current image" printing mode icon 824 is displayed. When the "print order" printing mode is enabled (block 912), the LCD 332 on the digital camera 300, or the optional TV monitor 474 in FIG 2) displays the printer GUI screen 4000 shown in FIG 9B. This "print order" screen displays the number of pictures tagged to be printed (e.g. 5 pictures) and the number of pages needed to make all the prints requested (e.g. 9 pages).

In block 914, since the print order mode is enabled, if the user presses the print button 836, in block 916 the digital printer 800 prints the images as specified in the print order, which was created in block 906. After printing the images, the digital printer 800 clears the print order.

In block 918, if the user presses the mode button 830, the "current image" printing mode is enabled in block 920. When the "current image" printing mode is enabled, the LCD 332 on the digital camera 300 displays a printer GUI screen 1000 shown in FIG 9A. This "print current" screen displays the current image. In block 922, if the user presses either the "+" button 834 to advance to the next image, or the "-" button 832 to move back to a previous image, the current image is changed in block 924, and the new image is displayed as the "current" image, in place of the image shown in FIG 9A. In block 926, if the user presses the "print" button 836, the digital printer 800 makes one print of the currently displayed image in block 928. This provides a very simple mode of printing only a single image, which is the image currently displayed on the color image display 332 of the digital camera 300.

In block 930, if the user presses the mode button 830, the "print all" printing mode is enabled in block 932. When the "print all" printing mode is enabled, the LCD 332 on the digital camera 300 displays a printer GUI screen 2000 shown in FIG 9C. This "print all" screen indicates that all pictures will be printed in this printing mode, and also indicates the total number of pages (e.g. 32 pages) needed to make all of the prints. In block 934, if the user presses the "print" button 836, the digital printer 800 makes one print of each of the images stored on the memory card 330. This provides a very simple mode of printing all of the captured images.

In block 938, if the user presses the mode button 830, the "index print" printing mode is enabled in block 940. When the "index print" printing mode is enabled, the LCD 332 on the digital camera 300 displays a printer GUI screen 3000 shown in FIG 9D. This "print index" screen indicates that all pictures will be printed in this printing mode as one or more index prints, and also indicates the total number of pages (e.g. 2 pages) needed to make the index prints. In block 942, if the user presses the "print" button 836, the digital printer 800 makes the requested index prints.

In block 946, if the user presses the mode button 830, the memory card 330 is checked in block 910 to determine if it contains a print order file as described earlier. If yes, the "print order" printing mode is enabled in block 912. If not, the "current image" printing mode is enabled in block 920.

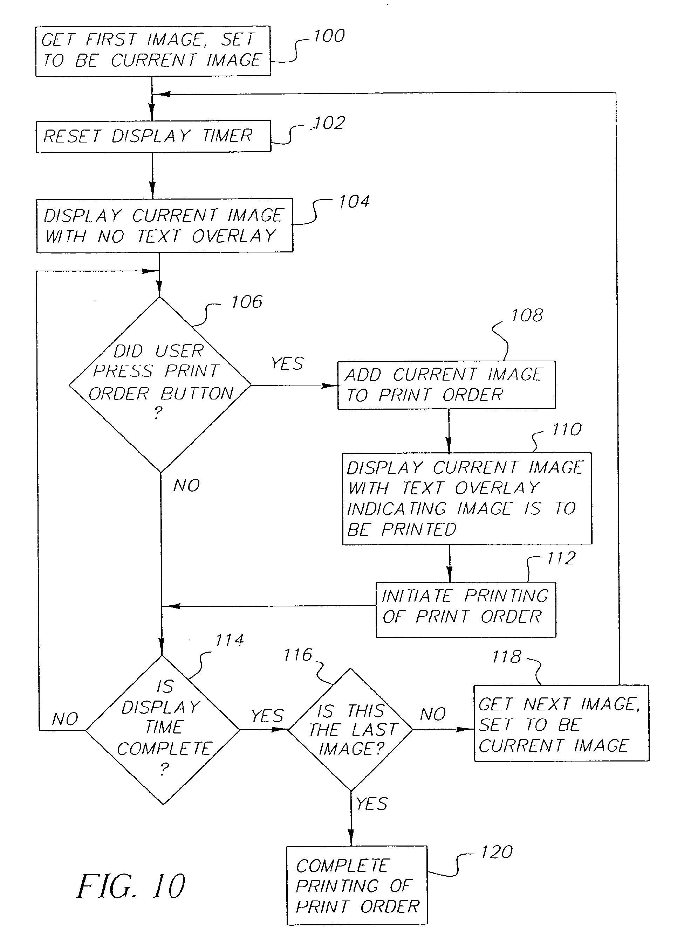

FIG. 10 depicts a flow diagram of a second method for viewing and selecting images for printing from the digital printer. In this embodiment, a set of digital images from one of a variety of digital storage media (such as a memory card, CD disc, DVD disc, floppy disc, etc.) is provided to the digital printer 800 using an appropriate interface or reader (such as a memory card slot, CD drive, etc.) The set of images is provided without a print order. The method depicted in FIG. 10 provides a simple, efficient way for the user to create a print order by pressing a "print" button during a slide show image display, as the images are automatically displayed in sequence from first to last. In block 100, the first image of the set (such as the first image stored on memory card 330 (e.g. image 632 named DCP_1686.JPG in FIG. 7)) is set to be the current image. In block 102, the slide show timer is reset, and begins counting the time until the next image should be displayed. In a preferred embodiment, the time per image is set to a default value, such as 5 seconds.

In block 104, the current image is displayed with no text overlay, since it is not included in the print order. In block 106, the processor 420 in the digital printer 800 determines whether the user pressed the print order buttons (e.g. print button 836 (see FIG. 4)). If the user presses the print button during the time the image is displayed (yes to block 106), a print of the current image (e.g. image 632 in FIG. 7) is added to the print order in block 108. This print order can be stored, for example, as temporary data in the RAM memory 426 of the digital printer 800. In block 110, the current image is displayed with a text overlay (or other type of indication) that the image has been included in the print order.

In block 112, the printing of the print order is initiated. Even though the other images of the set have not yet been displayed during the slide show, the printing of the first image in the print order begins. This enables the printing of the print order to be completed as quickly as possible. If the printing of the first image did not begin until the end of the "slide show", the time to display, select, and print all of the images in the print order would be longer.

If the user did not press the print order button in block 106 ("no" to block 106), in block 114 the processor 420 in the digital printer 800 checks whether the display time is complete. If not ("no" to block 114), blocks 106 through 114 are repeated. If the display timer has reached the time limit (e.g. 5 seconds) in block 114 ("yes" to block 114), in block 116 the processor 420 in digital printer 800 checks whether the current image (e.g. image 632 in FIG. 7) is the last image (e.g. image 648 named DCP_1694.JPG in FIG. 7) stored on the memory card 330, or other digital storage media. If the current image is not the last image ("no" to block 116), in block 118 the processor 420 in the digital printer 800 gets the next image (e.g. image 634 named DCP_1687.JPG in FIG. 7) and in block 102 resets the display timer for the new current image.

Blocks 102 through 114 are then repeated for all of the images stored on the memory card 330 or other digital storage media. Each time the user presses a print order button (block 106) the print order is updated to indicate that the current image should be printed. Thus, the user does not need to press any buttons to advance through the images to compose the print order. Rather, the images are automatically advanced, and the user only needs to press buttons when selecting particular images to be printed. After all of the images (e.g. images 632 through 648 in FIG. 7) have been displayed, the print order is complete.

If the current image is the last image ("yes" to block 116), in block 120 the slide show mode is now finished, and the printing of the print order, which was initiated in block 112, continues until all the images in the print order have been printed.

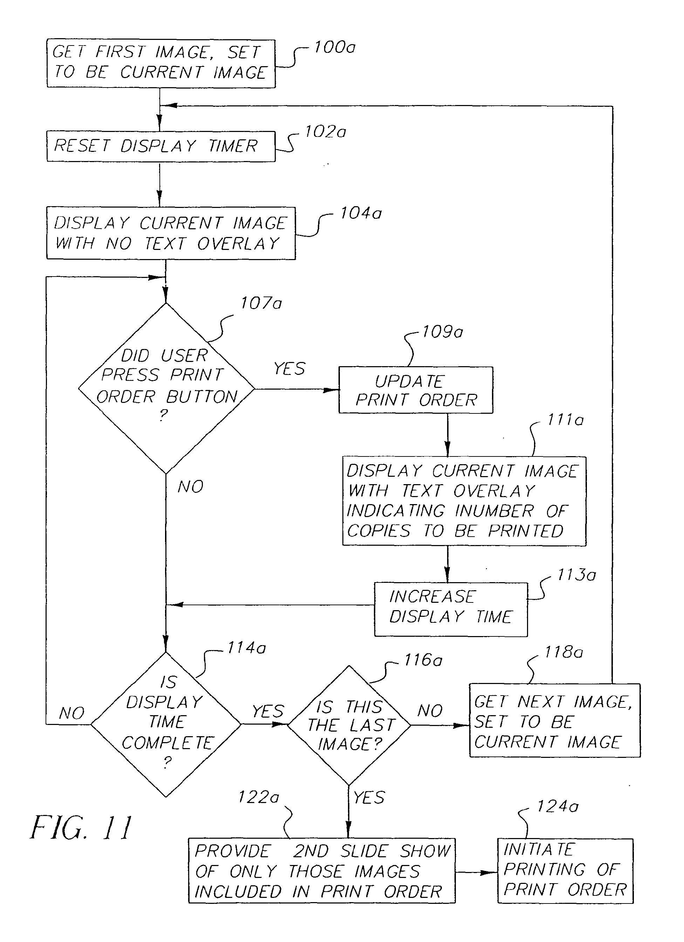

FIG. 11 depicts a flow diagram of a third method for viewing and selecting images for printing from the digital printer. In this embodiment, a set of digital images from one of a variety of digital storage media (such as a memory card, CD disc, DVD disc, floppy disc, etc.) is provided to the digital printer 800 using an appropriate interface or reader (such as a memory card slot, CD drive, etc.). The set of images is provided without a print order. The method depicted in FIG. 11 enables the user to create a print order by pressing "print" buttons, indicating how many prints are to be made of selected images, during a slide show image display. When the user presses a "print" button, the display time for that particular image is increased, so that the user has more time to decide on how many prints to make of that particular image. Also, once the slide show of all of the images in the set is completed, a second slide show, providing only those images included in the print order, is displayed to confirm the print order.

In block 100a, the first image of the set (such as the first image stored on memory card 330 (e.g. image 632 named DCP_1686.JPG in FIG. 7)) is set to be the current image. In block 102a, the slide show timer is reset, and begins counting up to the normal time that is used to display each image. In a preferred embodiment, the normal time per image is set to a default value, such as 5 seconds.

In block 104a, the current image is displayed with no text overlay, since it is not included in the print order. In block 107a, the processor 420 in the digital printer 800 determines whether the user pressed one of the print order buttons (e.g. print button 836 (see FIG. 4) to make a single print, or the "+" or "-" buttons 832, 834 to increase or decrease the number of prints to be made). If the user presses the print button during the time the image is displayed (yes to block 107a), the print order is updated in block 109a. As described earlier, the print order can be stored, for example, as temporary data in the RAM memory 426 of the digital printer 800, or as a print order file on the memory card 330 or other digital media used to store the images. In block 111a, the current image is displayed with a text overlay (or other type of indication) indicating the number of copies of this image that are to be printed.

In block 113a, the display time for this particular image is increased. This can be done by resetting the display timer (e.g. resetting the 5 second timer), or by increasing the total display time to a larger value (e.g. 10 seconds). Increasing the display time gives the user more time to press additional buttons in order to modify the number of prints. For example, after pressing the print button 836, the user can press the "+" 834 (see FIG. 4) button to increase the number of prints, or press the "-" button 832 to decrease the number of prints, or to cancel the print (if only one print is currently ordered).

Following block 113a, or if the user did not press a print order button in block 107a ("no" to block 107a), in block 114a the processor 420 in the digital printer 800 checks whether the display time is complete. If not ("no" to block 114a), blocks 107a through 114a are repeated. If the display timer has reached the time limit (e.g. 5 seconds if no print button has been pressed, or 10 seconds if a print button has been pressed) in block 114a ("yes" to block 114a), in block 116a the processor 420 in digital printer 800 checks whether the current image (e.g. image 632 in FIG. 7) is the last image (e.g. image 648 named DCP_1694.JPG in FIG. 7) stored on the memory card 330, or other digital storage media. If the current image is not the last image ("no" to block 116a), in block 118a the processor 420 in the digital printer 800 gets the next image (e.g. image 634 named DCP_1687.JPG in FIG. 7) and in block 102a resets the display timer for the new current image.

Blocks 102a through 114a are then repeated for all of the images stored on the memory card 330 or other digital storage media. Each time the user presses a print order button (block 107a) the print order is updated to indicate how many copies of the current image should be printed, and the display time is increased whenever the current image is added to the print order. Thus, the user does not need to press any buttons to advance through the images to compose the print order. Rather, the images are automatically advanced, and the user only needs to press buttons when selecting particular images to be printed. After all of the images (e.g. images 632 through 648 in FIG. 7) have been displayed, the print order is complete.

If the current image is the last image ("yes" to block 116a), in block 122a a second slide show is initiated, showing only those images which have been included in the print order. This allows the user to confirm the print order. Each of the images in the print order is displayed for a set time (e.g. 5 seconds) with a text overlay indicating the number of prints to be made for each image. At the end of this print order confirmation slide show, in block 124a the user is instructed to press the "print" button 836 (see FIG. 4) to initiate printing of the print order.

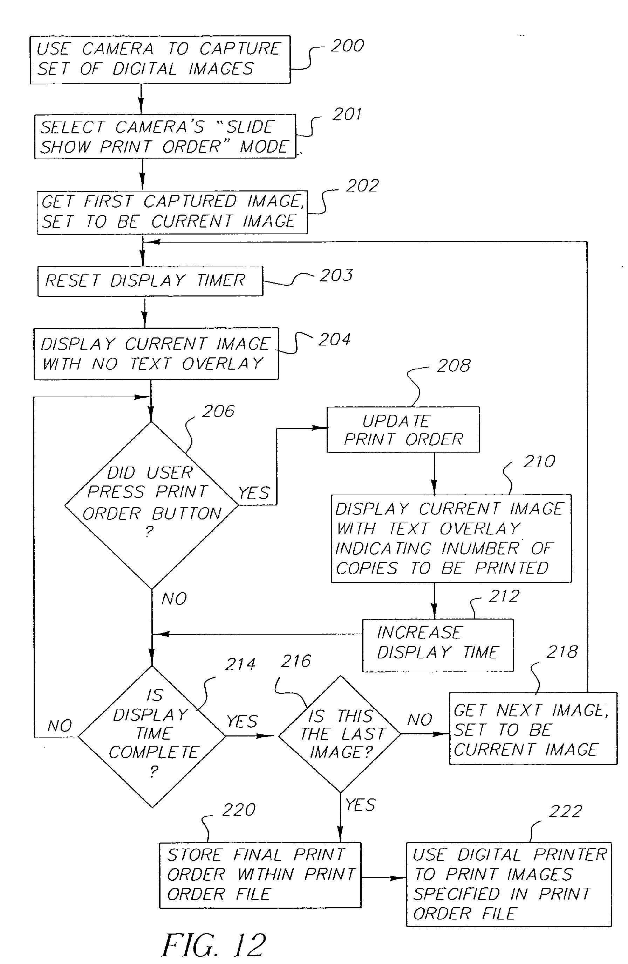

FIG. 12 depicts a flow diagram of a method for viewing and selecting images for printing from the digital camera 300, without using the digital printer 800. In this embodiment, a set of digital images captured by the digital camera 300 is displayed as a slide show on the color LCD image display 332 (see FIG. 1). As each image is displayed in sequence, the user can press a "print order" button on the digital camera 300 in order to include that image in the print order. When the user presses a "print" button, the display time for that particular image is increased, so that the user has more time to decide on how many prints to make of that particular image. Once the slide show of all of the images in the set is completed, the print order is converted to a print order file and stored on the memory card 330.

In block 200, the digital camera captures a set of digital images which are stored as image files on the memory card 330, as described earlier in reference to FIG. 1 and FIG. 7. In block 201, the user selects the cameras "slide show print order" mode, using user controls 303.

In block 202 the image processor 320 in the digital camera 300 sets the first image of the set (such as the first image stored on memory card 330 (e.g. image 632 named DCP_1686.JPG in FIG. 7)) to be the current image. In block 203, the slide show timer is reset, and begins counting up to the normal time that is used to display each image. In a preferred embodiment, the normal time per image is set to a default value, such as 5 seconds.

In block 204, the current image is displayed on the color LCD image display 332 with no text overlay, since it is not included in the print order. In block 206, the image processor 320 in the digital camera 300 determines whether the user pressed a print order button. If the user pressed a print order button during the time the image is displayed (yes to block 206), the print order is updated in block 208. In one preferred embodiment, the print order is temporarily stored in the RAM memory 326 of the digital camera 300 as the slide show is displayed, and is converted to a print order file after all of the slide show images have been displayed. In block 210, the current image is displayed with a text overlay (or other type of indication) indicating the number of copies of this image that are to be printed.

In block 212, the display time for this particular image is increased. This can be done by resetting the display timer (e.g. resetting the 5 second timer), or by increasing the total display time to a larger value (e.g. 10 seconds). Increasing the display time gives the user more time to press additional buttons in order to modify the number of prints.

Following block 212, or if the user did not press a print order button in block 206 ("no" to block 206), in block 214 the processor 320 in the digital camera 300 checks whether the display time is complete. If not ("no" to block 214), blocks 206 through 214 are repeated. If the display timer has reached the time limit (e.g. 5 seconds if no print button has been pressed, or 10 seconds if a print button has been pressed) in block 214 ("yes" to block 214), in block 216 the processor 320 in the digital camera 300 checks whether the current image (e.g. image 632 in FIG. 7) is the last image (e.g. image 648 named DCP_1694.JPG in FIG. 7) stored on the memory card 330. If the current image is not the last image ("no" to block 216), in block 218 the processor 320 in the digital camera 300 gets the next image (e.g. image 634 named DCP_1687.JPG in FIG. 7) and in block 203 resets the display timer for the new current image.

Blocks 203 through 214 are then repeated for all of the images stored on the memory card 330. Each time the user presses a print order button (block 206) the print order is updated to indicate how many copies of the current image should be printed, and the display time is increased whenever the current image is added to the print order. Thus, the user does not need to press any buttons to advance through the images to compose the print order. Rather, the images are automatically advanced, and the user only needs to press buttons when selecting particular images to be printed. After all of the images (e.g. images 632 through 648 in FIG. 7) have been displayed, the print order is complete.

If the current image is the last image ("yes" to block 216), in block 220 the print order information (e.g. the names of the images to be printed and the number of copies of each image to be printed) is converted to a print order file, such as the DPOF print order file described earlier with reference to Table 1. In block 222, a digital printer, such as digital printer 800, can be used to print the images specified in the print order file.

## Claims

1. A digital photography system comprising:
a digital camera (300) for capturing images and a printer (800) for producing hardcopy prints;
the camera (300) including:
an image sensor (314) for capturing images;
a memory (318) for storing a plurality of captured images; and
an image display (332) for displaying the stored images;
the printer (800) including;
a marking apparatus (412) adapted to provide the images on a print; an electrical interface for transferring images from the camera to the printer; and
user controls (430) for controlling the digital photography system to provide a slide show operating mode to display each of the plurality of captured images for a set time interval as a current image on an image display, and
responsive to a user engaging a print order user control during said set time interval, providing a print order indicating that a currently displayed image is to be printed.

2. A system according to claim 1, wherein the marking apparatus of the printer is a color marking engine adapted to print the images as indicated in the print order as hardcopy prints.

3. A system according to claim 1, wherein the printer further includes a recess for receiving the digital camera.

4. A system according to claim 1, wherein the print order is a DPOF print order file.

5. A system according to claim 1, wherein the user controls enable selecting from a plurality of printing modes.

6. A method of producing prints, the method comprising the steps of:
capturing and storing a plurality of images using an electronic camera;
providing a print order user control;
displaying a first image from the plurality of stored images for a first time interval on an image display;
responsive to a user engaging the print order user control during said first time interval, providing a print order indicating that the first image is to be printed;
at an end of the first time interval, automatically displaying a second image from the plurality of stored images for a second time interval; and
responsive to a user engaging the print order user control during said second time interval, providing a print order indicating that the second image is to be printed.

7. The method of claim 6, further including the step of producing prints as specified in said print orders.

8. A method of producing prints, the method comprising the steps of:
providing a set of digital images;
providing a print order user control;
displaying a first image from the set of digital images for a first time interval on an image display;
responsive to a user engaging the print order user control during said first time interval, providing a print order indicating that the first image is to be printed and increasing the first time interval to a larger time interval; and
at an end of the larger time interval automatically displaying a second image from the plurality of stored images.

9. A method of producing prints, the method comprising the steps of:
providing a set of digital images;
providing a print order user control;
displaying, on an image display, the set of digital images as a sequence of images which are automatically updated; and
responsive to a user engaging the print order user control during the display of a subset of the set of digital images, providing a print order indicating that the subset of digital images is to be printed.

10. A method of producing a print order using a digital camera, the method comprising the steps of:
capturing and storing a set of digital images using the digital camera;
displaying, on an image display of the digital camera, the set of digital images as a sequence of images which are automatically updated; and
responsive to a user engaging a print order user control during the display of a subset of the set of digital images, providing a print order indicating that the subset of digital images is to be printed.
